# EUROPÄISCHE PATENTSCHRIFT

(11) **EP 3 446 314 B1**
(45) Veröffentlichungstag und Bekanntmachung des Hinweises auf die Patenterteilung: **19.02.2020**
(21) Anmeldenummer: 17723022.4
(22) Anmeldetag: 21.04.2017
(51) Int. Cl.: G21D 1/00, F22D 5/30, G21D 3/14

(54) **PASSIVES FÜLLSTANDSREGELSYSTEM**
PASSIVE FILL STATE REGULATING SYSTEM
SYSTÈME PASSIF DE RÉGULATION DE NIVEAU DE REMPLISSAGE

(30) Priorität: 22.04.2016 DE 102016206906
(43) Veröffentlichungstag der Anmeldung: 27.02.2019
(73) Patentinhaber: Framatome GmbH, 91052 Erlangen (DE)
(72) Erfinder: KÖNIGSTEIN, Egon, 60435 Frankfurt (DE); KÜNNE, Sören, 61138 Niederdorfelden (DE)
(74) Vertreter: Lavoix
(86) Internationale Anmeldenummer: PCT/EP2017/059564
(87) Internationale Veröffentlichungsnummer: WO 2017/182657

(56) Entgegenhaltungen:
- US-A- 4 551 796
- Doris Neumann: "THE PASSIVE SAFETY SYSTEMS OF THE SWR 1000", , 8. April 2001 (2001-04-08), XP055386444, Gefunden im Internet: URL:http://www.iaea.org/inis/collection/NC LCollectionStore/_Public/33/010/33010806.p df [gefunden am 2017-06-29]

## Beschreibung

Die Erfindung bezieht sich auf ein passives Füllstandsregelsystem mit den Merkmalen des Oberbegriffs von Anspruch 1.

Demnach beruht die Erfindung auf einem passiven Füllstandsregelsystem mit
- einem ein Primärmedium aufnehmenden Behälter, wobei das Primärmedium in dem Behälter während des Betriebes eine Flüssigphase und eine Dampfphase besitzt,
- einer an den Behälter angeschlossen Einspeiseleitung für das Primärmedium, in die eine Regelarmatur geschaltet ist, und
- einem als kommunizierende Röhre an den Behälter angeschlossenen und von dem Primärmedium durchströmbaren Standrohr,
wobei das Standrohr in einem Teilabschnitt die Primärseite eines Wärmeübertragers bildet, dessen Sekundärseite eine ein Sekundärmedium aufnehmende Sekundärleitung aufweist, in die ein auf die Regelarmatur einwirkendes Pilotventil geschaltet ist.

In Kernkraftwerken sind etliche mit Flüssigkeit gefüllte Behälter vorhanden, für die eine Füllstandsregelung verwirklicht werden muss, einerseits für den Normalbetrieb und andererseits für Störfallsituationen. Hierzu zählen beispielsweise der Reaktordruckbehälter eines Druck- oder Siedewasserreaktors oder die Dampferzeuger, die bei einem Druckwasserreaktor die thermische Schnittstelle zwischen dem Primärkühlkreislauf und dem Sekundärkühlkreislauf bilden.

Die bisherige normalbetriebliche Füllstandsregelung, z. B. für einen Dampferzeuger, wird klassisch durch eine aktive leittechnische Regelung aufgebaut und benötigt Füllstandssensoren, elektrische Leitungen, einen Prozessrechner mit Regelungssoftware und eine elektrische Stromversorgung.

Eine passive Füllstandsnachführung, insbesondere für Störfälle, war bislang durch passive Impulsgeber möglich. Die Veröffentlichung Neumann D., "The passive safety systems of the SWR 1000", Proceedings of the 9th International Conference on Nuclear Engineering, ICONE-9, Nice, France, April 8-12, 2001 beschreibt zu diesem Zweck einen sogenannten Passive Pressure Pulse Transmitter (PPPT). Es handelt sich dabei im Prinzip um einen Wärmeübertrager, der primärseitig an den hinsichtlich seines Füllstandes zu überwachenden Behälter angeschlossen ist. Bei abgesenktem primärem Füllstand findet durch Wärmeübertrag auf die sekundäre Seite ein sekundärer Druckaufbau statt, mit dem ein einzelnes Schaltsignal zur Füllstandsanhebung gebildet wird. Das Rücksetzen des durch den PPPT bei "Füllstand tief" ausgelösten Signals wird dann durch einen zweiten PPPT (mit zugehöriger Ausdehnungsschleife) bei "Füllstand hoch" vorgenommen. Somit werden zwei passive Impulsgeber mit zugehörigen Leitungen und Anschlüssen für eine Intervallregelung benötigt, was baulich aufwendig ist und relativ viel Platz erfordert. Zudem kann das sprungartige Schaltverhalten zu unerwünschten Belastungen des Systems führen.

Zusammengefasst ist der PPPT ein Grenzsignalgeber, der bei Erreichen eines Füllstands-Grenzwertes schlagartig (Impuls) ein Signal erzeugt. Der PPPT kann den Füllstand nicht regeln, sondern öffnet bei Erreichen eines Grenzwertes (Füllstand unterschreitet Höhenkote) und setzt das Signal auch nicht wieder zurück. Bei Erreichen des eingestellten Sekundärdruckes werden das Pilotventil und die Regelarmatur komplett geöffnet. Weiterhin benötigt der PPPT zur Öffnung einer Armatur ein Hilfssystem wie z. B. Druckluft, wodurch der Grad der Passivität weiter reduziert wird, da dieses die Abhängigkeit erhöht und ausfallen kann.

Der Erfindung liegt daher die Aufgabe zugrunde, ein passives Füllstandsregelsystem der eingangs genannten Art anzugeben, das bei geringerem baulichen Aufwand als bislang eine zuverlässige, schnell ansprechende und bedarfsgerechte Füllstandsregelung gewährleistet.

Diese Aufgabe wird erfindungsgemäß gelöst durch ein Füllstandsregelsystem mit den Merkmalen des Anspruchs 1.

Als erfindungswesentlich wird dabei angesehen, dass der Wärmeübertrager eine vertikal ausgerichtete längliche Wärmeübertragungsfläche aufweist und das Pilotventil und/oder die Regelarmatur derart kontinuierlich / stufenlos verstellbar ist, dass der Durchfluss durch die Einspeiseleitung kontinuierlich / stufenlos mit dem Füllstand der Flüssigphase im Behälter variiert.

Ein wesentlicher Beitrag der Erfindung liegt darin, dass durch die spezifische Auslegung des Wärmeübertragers in Kombination mit dem dafür ausgelegten, stufenlos verstellbaren Pilotventil bei absinkendem Pegelstand infolge des vergrößerten Wärmeübertrages ein direktes Hub-Stellungssignal in Richtung weiter öffnender Regelarmatur und damit größerem Durchfluss resultiert. Umgekehrt wird bei wieder steigendem Füllstand der Wärmeübertrag stark reduziert, dadurch der sekundäre Druck wieder abgesenkt und die Regelarmatur in Schließrichtung bewegt. Die Regelung ist adaptiv in dem Sinne, dass die pro Zeiteinheit nachgespeiste Flüssigkeitsmenge an den tatsächlichen aktuellen Bedarf angepasst ist, wobei unerwünschte Sprünge und Oszillationen des Regelkreises vermieden werden. Zudem wird nur noch ein einziger Wärmeübertrager mit einem zugehörigen Standrohr benötigt.

Zusammenfassend lässt sich das erfindungsgemäß vorgeschlagene passive Füllstandsregelsystem wie folgt charakterisieren:
- Das passive Füllstandsregelsystem umfasst einen vertikalen Wärmetauscher (Wärmeübertrager), der den gesamten Regelbereich von Füllstand tief bis Füllstand hoch abdeckt, d. h. der längliche Wärmetauscher ist vertikal ausgerichtet und kann gegebenenfalls mehr als einen Meter lang (hoch) sein.
- Der Wärmetauscher mit seinem Außen- und Innenrohr ist im nachfolgenden Ausführungsbeispiel nur grob skizziert und bedarf zur konkreten Realisierung einer detaillierten Auslegung, die einerseits anwendungsspezifisch gestaltbar ist, andererseits über den Rahmen der Beschreibung der erfindungswesentlichen Merkmale hinaus geht.
- Es kann in einer vorteilhaften Ausgestaltung durchaus sein, dass das Innenrohr einen variablen Durchmesser über längere Abschnitte aufweist, um den Wärmeeintrag zu dosieren. Des Weiteren kann das Außenrohr Kühlrippen haben, um die zugeführte Wärme an die Umgebung abzugeben, damit kürzere Reaktionzeiten möglich sind.
- Bei Erreichen von Füllstand hoch ist die Bespeisungsleitung geschlossen und bei Füllstand tief komplett geöffnet. Dazwischen ergeben sich stufenlos Zwischenstände der Regelarmatur, und damit variiert auch der Bespeisungs-Durchfluss.
- Das passive Füllstandsregelsystem ist autark und benötigt keine Hilfsenergie oder ein Hilfssystem, um den Füllstand im Regelbereich zu halten.
- Das passive Füllstandsregelsystem führt einen kontinuierlichen Öffnungs- und Schließvorgang des Pilotventils aus.
- Das passive Füllstandsregelsystem ist sehr kompakt und benötigt wenig Platz für den Einbau im Bereich des Standrohres.
- Das passive Füllstandsregelsystem hat nur geringe Massen und muss demzufolge für Erdbebenlasten nicht massiv verankert werden.

Vorteilhafte Ausgestaltungen der Erfindung und alternative Varianten sind Gegenstand der abhängigen Ansprüche sowie der nachfolgenden detaillierten Beschreibung in Verbindung mit den zugehörigen Zeichnungen.

Dabei zeigen FIG. 1 bis FIG. 3 in jeweils stark vereinfachter und schematischer Darstellung einen Längsschnitt durch einen Dampferzeuger als Beispiel für einen mit Flüssigkeit gefüllten Behälter mitsamt zugehörigen Komponenten für eine passive Füllstandsregelung. FIG. 1 repräsentiert einen normalen (hohen) Füllstand, FIG. 2 einen etwas abgesenkten Füllstand und FIG. 3 einen niedrigen Füllstand.

Gleiche Teile sind in allen Figuren mit denselben Bezugszeichen versehen.

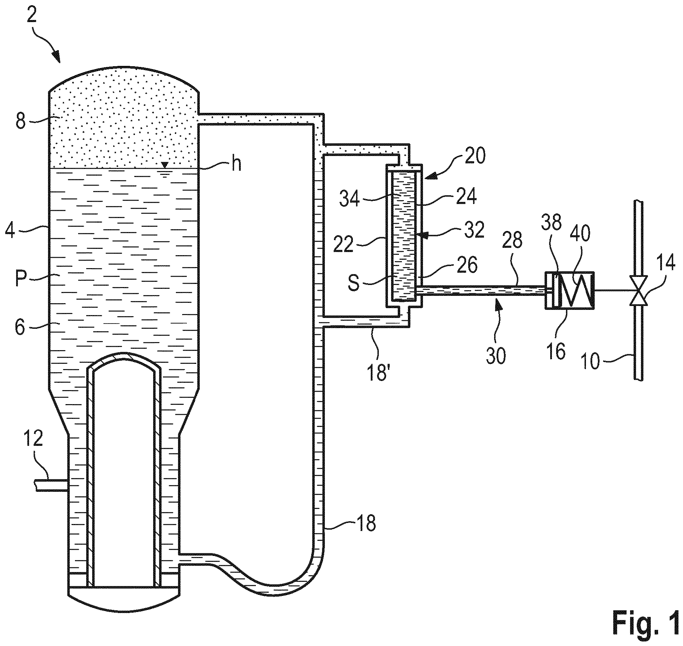

FIG. 1 zeigt einen schematischen Längsschnitt durch einen Dampferzeuger 2 eines Kernreaktors, beispielsweise vom Typ Europäischer Druckwasserreaktor (EPR). Der Dampferzeuger 2 weist einen druckdicht gegenüber der Umgebung geschlossenen Behälter 4 auf, in dem sich während des Betriebes ein Primärmedium P, hier im Wesentlichen Wasser, befindet. In einem unteren Teil des Behälters 4 befindet sich das Primärmedium P im flüssigen Aggregatzustand, der Flüssigphase 6. Je nach vorliegenden Betriebsbedingungen verdampft ein Teil der Flüssigphase 6 und bildet im darüber liegenden Teil des Behälters 4 eine Dampfphase 8.

Für einen sicheren Betrieb ist vorgesehen, dass der Füllstand bzw. Pegelstand (mit der Pegelhöhe h) der Flüssigphase 6 im Behälter 4 einerseits einen vorgegebenen minimalen Füllstand nicht unterschreitet und andererseits einen vorgegebenen maximalen Füllstand nicht überschreitet, sich mit anderen Worten also innerhalb des dadurch definierten Bandes oder Intervalls bewegt. Im Falle absinkenden Füllstandes ist daher spätestens bei Erreichen des minimalen Füllstandes eine Nachspeisung bzw. Einspeisung von flüssigem Primärmedium P über eine an den Behälter 4 angeschlossene Einspeiseleitung 10 vorgesehen. Der Anschluss 12 der Einspeiseleitung 10 an den Behälter 4 ist lediglich in FIG. 1 schematisch angedeutet. Die Bespeisung kann beispielsweise aus einem Reservoir mittels aktiver Pumpen oder auf passive Weise befolgen (z. B. durch geodätische Becken oder Dampfstrahlpumpen). Dadurch steigt der Füllstand wieder an. Spätestens bei Erreichen des maximalen Füllstandes ist die Einspeisung wieder zu beenden.

Zur Einstellung des Durchflusses ist ein Regelventil / eine Regelarmatur 14 in die Einspeiseleitung 10 geschaltet. Die Regelarmatur 14 wird durch ein auch als Steuer- oder Vorsteuerventil bezeichnetes Pilotventil 16 angesteuert. Das Pilotventil 16 wiederum ist in ein passives Regelsystem eingebunden, dessen Aufbau und Funktionsweise nachfolgend genauer beschrieben werden.

Zur Realisierung der passiven Füllstandsregelung ist ein Standrohr 18 an den Behälter 4 angeschlossen und mit dessen Innenraum gemäß dem Prinzip kommunizierender Röhren strömungsmäßig verbunden. Das untere Ende des Standrohres 18 mündet unterhalb des minimalen Füllstandes, insbesondere in der Bodenregion, in die Flüssigphase 6 im Behälter 4. Das obere Ende des Standrohres 18 mündet oberhalb des maximalen Füllstandes, insbesondere in der Deckenregion, in die Dampfphase 8 im Behälter 4. In einem zwischen dem oberen und dem unteren Anschluss liegenden Abschnitt verläuft das Standrohr 18 in vertikaler Ausrichtung. Da das Standrohr 18 frei durchströmbar ist, gleicht sich der Pegelstand der Flüssigphase im Standrohr 18 stets in etwa dem Pegelstand im Behälter 4 an. Bei genauerer Betrachtung ist der Pegelstand im Standrohr 18 aufgrund der sich dort einstellenden, etwas niedrigeren Mediumstemperatur leicht gegenüber dem Pegelstand im Behälter 4 abgesenkt.

Im Bereich des Vertikalabschnitts bildet das Standrohr 18 die Primärseite eines Wärmeübertragers 20 aus. Im hier gezeigten Beispiel ist genauer gesagt ein von dem Standrohr 18 abzweigendes, in strömungsmäßiger Parallelschaltung zu ihm angeordnetes zweites Standrohr 18' zu diesem Zweck vorgesehen - der Wärmeübertrager 20 kann alternativ aber auch direkt in das Standrohr 18 integriert sein. In diesem Abschnitt bildet das Standrohr 18' ein vertikal ausgerichtetes, länglich ausgedehntes Mantelrohr oder Außenrohr 22, in dessen Innenraum ein ebenfalls vertikal ausgerichtetes, länglich ausgedehntes Innenrohr 24 angeordnet ist. Der im Querschnitt im Wesentlichen ringförmige Zwischenraum 26 zwischen der Innenwand des Außenrohres 22 und der Außenwand des Innenrohres 24 ist von dem Primärmedium P durchströmbar.

Das die Sekundärseite des Wärmeübertragers 20 bildende Innenrohr 24 ist an beiden Enden druckdicht verschlossen. Von ihm zweigt am unteren Ende eine durch den Zwischenraum 26 und durch die Wand des Außenrohres 22, hier beispielsweise in radialer Richtung, nach außen geführte Leitung 28 ab, an deren anderem Ende das auf die Regelarmatur 14 in der Einspeiseleitung 10 einwirkendes Pilotventil 16 angeordnet ist und dabei einen endseitigen Verschluss der Leitung 28 bildet. Das von dem Innenrohr 24 und der Leitung 28 gebildete zusammenhängende Leitungssystem wird insgesamt auch als Sekundärleitung 30 bezeichnet. Die Sekundärleitung 30 ist mit einem Sekundärmedium S gefüllt, vorzugsweise im Wesentlichen Wasser. Die Wand des Innenrohres 24 bildet somit eine im Wesentlichen vertikal ausgerichtete längliche, vorzugsweise zylindermantelförmige oder kegelmantelförmige Wärmeübertragungsfläche 32 für einen Wärmeübertrag vom Primärmedium P zum Sekundärmedium S (oder auch umgekehrt).

In Abhängigkeit von den vorliegenden Druck- und Temperarturverhältnissen im Wärmeübertrager 20 liegt ein mehr oder weniger großer Teil des Sekundärmediums S im Innenrohr 24 und in der Leitung 28 in der Flüssigphase 34 vor, während sich darüber, am oberen Ende des Innenrohres 24 eine Dampfphase 36 aus verdampftem Sekundärmedium S ausbilden kann. Dadurch liegt an dem stufenlos verstellbaren Ventilkolben 38 des Pilotventils 16 ein mit den Betriebsbedingungen variierender Betätigungsdruck an, der zu einer entsprechenden kontinuierlichen Änderung der Ventilstellung entgegen (oder mit) dem als Rückstellmechanismus wirksamen Federelement 40 führt. Dadurch ändert sich auch die Stellung der stufenlos / kontinuierlich verstellbaren Regelarmatur 14 - und dementsprechend der Durchfluss von Primärmedium P durch die Einspeiseleitung 10 in den Behälter 4 - kontinuierlich.

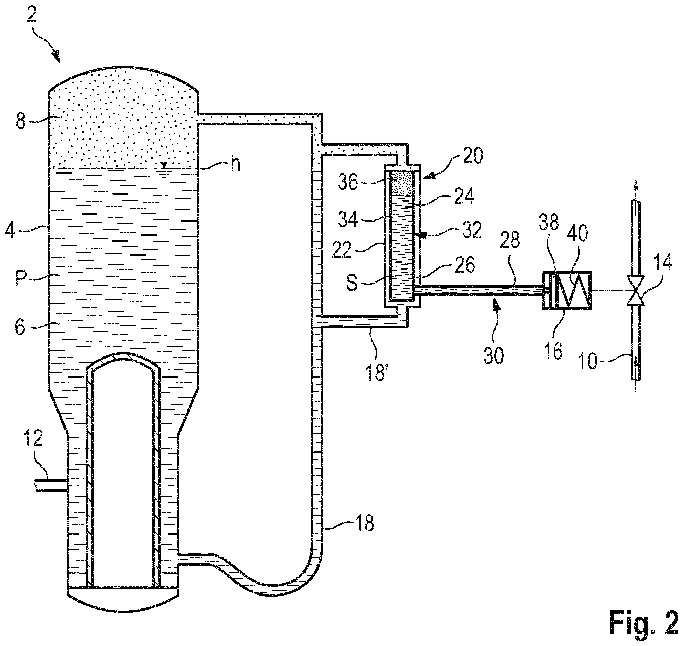

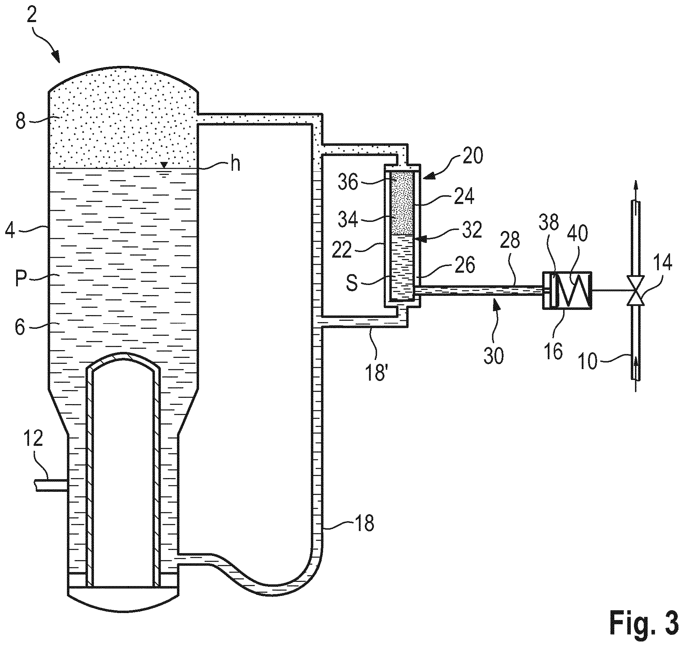

Im Detail lassen sich die Komponentenauslegung und der verfahrenstechnische Ablauf wie folgt beschreiben:
Sinkt der Füllstand der Flüssigphase 6 im Behälter 4, so sinkt auch der Füllstand im Standrohr 18, 18' und Dampf strömt von oben in das Außenrohr 22 des Wärmeübertragers 20. Hierbei kondensiert der Dampf am kühleren, mit Flüssigkeit gefüllten Innenrohr 24 und die übertragene Wärme erhöht die Temperatur des Sekundärmediums S (siehe FIG. 2). Bei weiter abnehmendem Füllstand strömt mehr Dampf in den Wärmeübertrager 20. Die erhöhte Wärmezufuhr lässt nach Erreichen der Sättigungstemperatur des Sekundärmediums S den Sekundärdruck und damit den Betätigungsdruck auf das Pilotventil 16 steigen. Wenn der Sekundärdruck aufgrund des Wärmeeintrags steigt, werden nach Erreichen der Sättigungstemperatur des Sekundärmediums S Dampfblasen entstehen. Hierdurch kommt es zur weiteren Drucksteigerung. Diese Drucksteigerung setzt sich bis in das Pilotventil 16 fort und erzeugt dort eine Kraft, die als Stellkraft in der Regelarmatur 14 benutzt wird. Die Stellkraft erzeugt eine stufenlose Stellungsänderung der Regelarmatur 14 und benötigt keine weitere Hilfsenergie (siehe FIG. 3).

Steigt der Füllstand im Behälter 4, so steigt auch der Füllstand im Standrohr 18 und flüssiges Primärmedium P strömt von unten in den Mantel des Wärmeübertragers 20. Hierbei endet die Dampfkondensation am flüssigkeitsgefüllten Innenrohr 24 und die übertragene Wärme sinkt merklich ab. Nach Unterschreiten der Sättigungstemperatur des Sekundärmediums S sinkt der Sekundärdruck wieder ab. Wenn der Sekundärdruck aufgrund des reduzierten Wärmeeintrags sinkt, bewegt sich das Pilotventil 16 aufgrund der Federrückstellung durch das Federelement 40 in Schließrichtung, und die Regelarmatur 14 bewegt sich ebenfalls stufenlos in Schließrichtung (siehe FIG 1).

In den Figuren ist die geschlossene Stellung der Regelarmatur 14 dadurch angedeutet, dass das entsprechende Symbol schwarz ausgefüllt ist. In der teilweise oder vollständig geöffneten Stellung ist die Füllung nur teilweise oder gar nicht vorhanden. Außerdem ist der zur jeweiligen Armaturenstellung korrespondierende Volumenstrom durch die Einspeiseleitung 10 (in FIG. 2 und 3) durch Strömungspfeile entsprechender Größe dargestellt.

Die vertikale Länge (Höhe) der wirksamen Wärmeübertragungsfläche 32 wird durch den Füllstands-Regelbereich bestimmt. Die Regelgrößen wie Ansprechwerte und Gradienten werden durch die Auslegung des Wärmeübertragers 20 und der zugeordneten Regelventile/-armaturen 14, 16 bestimmt.

Im Ergebnis ist durch die beschriebenen Maßnahmen ein passives Füllstandsregelsystem für einen Behälter 4 verwirklicht, welches automatisch und ohne weitere Hilfsenergie ab einem festgelegten Füllstandsgrenzwert bzw. Auslösewert eine Regelarmatur 14 zur Anhebung des Füllstandes stufenlos öffnet. Nach einsetzender Bespeisung und wieder ansteigendem Füllstand reduziert das Füllstandsregelsystem automatisch die Stellung der Regelarmatur 14 und schließt diese selbsttätig bei Erreichen oder Überschreiten des Füllstandsgrenzwertes.

Durch die stufenlose Charakteristik weist die Regelung einen adaptiven Charakter auf: Bei nur geringem Absinken des Füllstandes unter den Auslösewert öffnet die Regelarmatur auch nur geringfügig, so dass der nachgespeiste Volumenstrom gering ist. Diese geringe Nachspeisung setzt aber direkt bei Unterschreiten des Auslösewertes ein, ohne nennenswerte Verzögerung, und ist zum Ausgleich normaler Schwankungen völlig ausreichend. Bei einer massiven Absenkung des Füllstandes hingegen, etwa bei einer Leckage, öffnet die Regelarmatur vollständig, so dass der nachgespeiste Volumenstrom zunächst maximal ist und bei steigendem Füllstand dann wieder abnimmt. Ist der Füllstand wieder über den Auslösewert gestiegen, so ist die Regelarmatur vollständig geschlossen. Das Spiel wiederholt sich beliebig oft, solange der nachzuspeisende Vorrat nicht erschöpft ist.

Wie man aus den Figuren erkennt, entspricht die Einbauhöhe des oberen Endes der Wärmeübertragungsfläche 32 im Wesentlichen dem maximalen Füllstand im Behälter 4 und damit dem Auslösewert für das Öffnen der Regelarmatur 14 bei absinkendem Füllstand. Die vertikale Ausdehnung der Wärmeübertragungsfläche 32 nach unten ist zweckmäßigerweise mindestens so groß, dass eine vollständige Öffnung der Regelarmatur 14 gewährleistet ist, wenn der Füllstand bis zum unteren Ende der Wärmeübertragungsfläche 32 abgesunken ist.

Im Gegensatz zu den bislang bekannten Passive Pressure Pulse Transmitters (PPPTs), die in ihrem Verhalten einem digitalen Endlagenschalter ähneln, ist die erfindungsgemäße Lösung eher mit einem stufenlosen Schiebeschalter vergleichbar.

Auch wenn in den meisten Anwendungsfällen die beschriebene Anordnung des Wärmeübertragers in einem parallel zum Behälter verlaufenden, vertikal ausgerichteten Standrohr besonders zweckmäßig sein dürfte, so sind doch davon abweichende Ausgestaltungen möglich. Denkbar ist etwa ein als Spiralrohr (Helix) ausgeführtes Standrohr mit darin eingeschlossenem Innenrohr. Abweichend von der beschriebenen Anordnung kann beispielsweise die Sekundärseite des Wärmeübertragers als Mantelrohr oder Außenrohr, welches das primäre Standrohr umschließt, ausgebildet sein. Wesentlich ist dabei, dass die vom Primärmedium umströmbare Wärmeübertragungsfläche zumindest eine vertikale Komponente besitzt, die vorteilhafterweise derart ausgedehnt ist, dass der mit der Füllstandshöhe variierende Sekundärdruck den Hub- oder Stellbereich des Pilotventils vollständig abdeckt. Weiterhin ist es denkbar, auf das Standrohr komplett zu verzichten und stattdessen das sekundärseitige Innenrohr direkt im Behälter zu platzieren, der dann selber die Primärseite des Wärmeübertragers darstellt.

Unter Umständen kann anstelle der zweistufigen Ventilanordnung bestehend aus Pilotventil und Regelarmatur ein einstufiges, stufenlos zwischen einer Öffnungsstellung und einer Schließstellung verstellbares Regelventil vorhanden sein.

Eine besonders vorteilhafte Anwendung des beschriebenen passiven Füllstandsregelsystems besteht im Zusammenhang mit Notfallbespeisung eines Dampferzeugers in einem Druckwasserreaktor, insbesondere in Kombination mit einer dampfbetriebenen Einspeisepumpe. Durch eine derartige Kombination können Ereignisse wie z. B. Station Blackout rein passiv beherrscht werden. Des Weiteren ist eine Verwendung bei der Notfallkühlung eines Reaktordruckbehälters möglich. Davon unabhängig ist solch ein passiver Füllstandsregler natürlich auch für andere Anwendungen in der nuklearen und konventionellen Kraftwerkstechnik einsetzbar.

### Bezugszeichenliste

- 2: Dampferzeuger
- 4: Behälter
- 6: Flüssigphase (Primärmedium)
- 8: Dampfphase (Primärmedium)
- 10: Einspeiseleitung
- 12: Anschluss
- 14: Regelarmatur
- 16: Pilotventil
- 18, 18': Standrohr
- 20: Wärmeübertrager
- 22: Außenrohr
- 24: Innenrohr
- 26: Zwischenraum
- 28: Leitung
- 30: Sekundärleitung
- 32: Wärmeübertragungsfläche
- 34: Flüssigphase (Sekundärmedium)
- 36: Dampfphase (Sekundärmedium)
- 38: Ventilkolben
- 40: Federelement

- h: Pegelhöhe
- P: Primärmedium
- S: Sekundärmedium

## Patentansprüche

1. Passives Füllstandsregelsystem, mit
• einem ein Primärmedium (P) aufnehmenden Behälter (4), wobei das Primärmedium (P) in dem Behälter (4) während des Betriebes eine Flüssigphase (6) und eine Dampfphase (8) besitzt,
• einer an den Behälter (4) angeschlossen Einspeiseleitung (10) für das Primärmedium (P), in die eine Regelarmatur (14) geschaltet ist, und
• einem als kommunizierende Röhre an den Behälter (4) angeschlossenen
und von dem Primärmedium (P) durchströmbaren Standrohr (18, 18'), wobei das Standrohr (18, 18') in einem Teilabschnitt die Primärseite eines Wärmeübertragers (20) bildet, dessen Sekundärseite eine ein Sekundärmedium (S) aufnehmende Sekundärleitung (30) aufweist, in die ein auf die Regelarmatur (14) einwirkendes Pilotventil (16) geschaltet ist,
**dadurch gekennzeichnet, dass**
der Wärmeübertrager (20) eine überwiegend vertikal ausgerichtete längliche Wärmeübertragungsfläche (32) aufweist und dass das Pilotventil (16) und die Regelarmatur (14) derart kontinuierlich verstellbar sind, dass der Durchfluss durch die Einspeiseleitung (10) kontinuierlich mit dem Füllstand der Flüssigphase (6) im Behälter (4) variiert.

2. Füllstandsregelsystem nach Anspruch 1, welches derart ausgelegt ist, dass der Durchfluss durch die Einspeiseleitung (10) monoton mit steigendem Füllstand im Behälter (4) abnimmt.

3. Füllstandsregelsystem nach Anspruch 1 oder 2, welches derart ausgelegt ist, dass der Durchfluss durch die Einspeiseleitung (10) bei Erreichen eines vorgegebenen maximalen Füllstandes im Behälter (4) auf null zurückgeht.

4. Füllstandsregelsystem nach einem der vorherigen Ansprüche, wobei das Standrohr (18, 18') in dem Abschnitt, in dem der Wärmeübertrager (20) ausgebildet ist, ein Außenrohr (22) bildet, welches ein Innenrohr (24) umschließt, das einen Abschnitt der Sekundärleitung (30) bildet, und wobei der Zwischenraum (26) zwischen Außenrohr (22) und Innenrohr (24) von dem Primärmedium (P) durchströmbar ist.

5. Füllstandsregelsystem nach Anspruch 4, wobei das Innenrohr 4 einen zylindrischen oder kegelförmigen Umriss besitzt.

6. Füllstandsregelsystem nach einem der vorherigen Ansprüche, wobei das Pilotventil (16) einen federbelasteten Rückstellmechanismus besitzt.

7. Füllstandsregelsystem nach einem der vorherigen Ansprüche, wobei das Primärmedium (P) und das Sekundärmedium (S) im Wesentlichen Wasser sind.

8. Füllstandsregelsystem nach einem der vorherigen Ansprüche, wobei der Behälter (4) ein Dampferzeuger (2) oder ein Reaktordruckbehälter eines Kernreaktors ist.

9. Kernreaktor mit einem Dampferzeuger oder einem Reaktordruckbehälter und mit einem zugehörigen Füllstandsregelsystem nach einem der vorherigen Ansprüche.

## Claims

1. A passive fill-level control system, having
• a container (4) receiving a primary medium (P), wherein the primary medium (P) in the container (4) has a liquid phase (6) and a steam phase (8) during operation,
• a feed line (10) for the primary medium (P) connected to the container (4), into which feed line a control valve (14) is connected, and
• a standpipe (18, 18') which is connected as a communicating pipe to the container (4) and through which the primary medium (P) can flow,
wherein the standpipe (18, 18') in a partial section forms the primary side of a heat exchanger (20), the secondary side of which has a secondary line (30) receiving a secondary medium (S), into which a pilot valve (16) acting on the control valve (14) is connected,
**characterized in that**
the heat exchanger (20) has a predominantly vertically oriented elongated heat exchange surface (32) and that the pilot valve (16) and the control valve (14) can be adjusted continuously in such a manner that the flow through the feed line (10) continuously varies with the fill-level of the liquid phase (6) in the container (4).

2. The fill-level control system according to Claim 1, which is designed in such a manner that the flow through the feed line (10) monotonically decreases with increasing fill level in the container (4).

3. The fill-level control system according to Claim 1 or 2, which is designed in such a manner that the flow through the feed line (10) returns to zero upon reaching a predetermined maximum fill level in the container (4).

4. The fill-level control system according to any one of the preceding claims, wherein the standpipe (18, 18') in the section, in which the heat exchanger (20) is formed, forms an outer pipe (22), which encloses an inner pipe (24), which forms a section of the secondary line (30), and wherein the primary medium (P) can flow through the intermediate space (26) between outer pipe (22) and inner pipe (24).

5. The fill-level control system according to Claim 4, wherein the inner pipe 4 has a cylindrical or conical contour.

6. The fill-level control system according to any one of the preceding claims, wherein the pilot valve (16) has a spring-loaded reset mechanism.

7. The fill-level control system according to any one of the preceding claims, wherein the primary medium (P) and he secondary medium (S) are substantially water.

8. The fill-level control system according to any one of the preceding claims, wherein the container (4) is a steam generator (2) or a reactor pressure container of a nuclear reactor.

9. A nuclear reactor with a steam generator or a reactor pressure container and with an associated fill-level control system according to any one of the preceding claims.

## Revendications

1. Système de régulation de niveau de remplissage passif avec
• un récipient (4) contenant un fluide primaire (P), le fluide primaire (P) dans le récipient (4) possédant, pendant le fonctionnement, une phase liquide (6) et une phase vapeur (8),
• une conduite d'alimentation (10) raccordée au récipient (4) pour le fluide primaire (P), dans laquelle est branchée une robinetterie de régulation (14) et
• un tube vertical (18, 18'), raccordé, en tant que canalisation de communication, au récipient (4) et pouvant être traversé par le fluide primaire (P),
le tube vertical (18, 18') constituant, dans une portion partielle, le côté primaire d'un échangeur thermique (20), dont le côté secondaire comprend une conduite secondaire (30) contenant un fluide secondaire (S), dans laquelle est branchée une vanne pilote (16) agissant sur la robinetterie de régulation (14),
**caractérisé en ce que**
l'échangeur thermique (20) comprend une surface d'échange thermique (32) allongée orientée globalement verticalement et **en ce que** la vanne pilote (16) et la robinetterie de régulation (14) peuvent être réglées en continu de façon à ce que le débit à travers la conduite d'alimentation (10) varie de manière continue avec le niveau de remplissage de la phase liquide (6) dans le récipient (4).

2. Système de régulation de niveau de remplissage selon la revendication 1, qui est conçu de façon à ce que le débit à travers la conduite d'alimentation (10) diminue de façon monotone lorsque le niveau de remplissage dans le récipient (4) augmente.

3. Système de régulation de niveau de remplissage selon la revendication 1 ou 2, qui est conçu de façon à ce que le débit à travers la conduite d'alimentation (10) revienne à zéro lorsqu'un niveau de remplissage maximal prédéterminé est atteint dans le récipient (4).

4. Système de régulation de niveau de remplissage selon l'une des revendications précédentes, le tube vertical (18, 18') constitue, dans la portion dans laquelle l'échangeur thermique (20) est disposé, un tube externe (22) qui entoure un tube interne (24) qui constitue une portion de la conduite secondaire (30) et l'espace intermédiaire (26) entre le tube externe (22) et le tube interne (24) peut être traversé par le fluide primaire (P).

5. Système de régulation de niveau de remplissage selon la revendication 4, le tube interne 4 présentant un contour cylindrique ou conique.

6. Système de régulation de niveau de remplissage selon l'une des revendications précédentes, la vanne pilote (16) comprenant un mécanisme de rappel muni d'un ressort.

7. Système de régulation de niveau de remplissage selon l'une des revendications précédentes, le fluide primaire (P) et le fluide secondaire (S) étant essentiellement de l'eau.

8. Système de régulation de niveau de remplissage selon l'une des revendications précédentes, le récipient (4) étant un générateur de vapeur (2) ou un récipient sous pression d'un réacteur nucléaire.

9. Réacteur nucléaire avec un générateur de vapeur ou un récipient sous pression de réacteur et avec un système de régulation de niveau de remplissage selon l'une des revendications précédentes.
